Europäisches Patentamt

European Patent Office

Office européen des brevets

(19)

(11)     **EP 0 498 075 B1**

(12)                    **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int. Cl.⁶: **B60T 8/00**

(21) Anmeldenummer: **91121961.6**

(22) Anmeldetag: **20.12.1991**

(54) **Schlupfregelsystem**

Slip control system

Système de contrôle de glissement

(84) Benannte Vertragsstaaten:
**DE FR GB IT**

(30) Priorität: **02.02.1991 DE 4103138**

(43) Veröffentlichungstag der Anmeldung:
**12.08.1992 Patentblatt 1992/33**

(73) Patentinhaber: **ROBERT BOSCH GMBH 70442 Stuttgart (DE)**

(72) Erfinder:
 • **Weber, Werner, Dipl.-Ing.(FH) W-6907 Nussloch (DE)**
 • **Dominke, Peter, Dipl.-Ing.(FH) W-7120 Bietigheim/Metterzimmern (DE)**
 • **Atoche, Carlos, Dipl.-Ing.(FH) W-7254 Hemmingen (DE)**
 • **Bernardi, Edgar, Dr. Dipl.-Ing.(FH) W-6086 Riedstadt (DE)**

(56) Entgegenhaltungen:
**EP-A- 0 403 055          DE-A- 3 925 889
FR-A- 2 566 132**

## Beschreibung

### Stand der Technik

Es ist bekannt, bei Schlupfregelsystemen (ABS oder ASR) während eines Rechenzyklus die Nulldurchgänge der Ausgangsspannung von den die Radgeschwindigkeit messenden Sensoren zu zählen und aus dieser Zahl und der seit dem ersten Nulldurchgang vergangenen Zeit die Geschwindigkeit des Rads zu berechnen. Dabei hat man die Zahl der zu zählenden Nulldurchgänge auf einen maximalen Wert (z. B. 16 in einem Rechnerzyklus von 10 msec) begrenzt, um die Belastung des Mikrokontrollers durch Programmunterbrechungen (Interrupts) zu minimieren und damit die Rechnerzykluszeit 10 ms einzuhalten. Der (zuletzt) errechnete Geschwindigkeitswert wird dann gegebenenfalls begrenzt (z. B. auf 50 g Änderung in beide Richtungen) und gespeichert und im folgenden Rechenzyklus als Geschwindigkeitswert zur Gewinnung der Ansteuersignale für die Bremsdrucksteuereinrichtung mittels eines vorgegebenen Algorithmus benutzt. Bei hohen Drehzahlen des Rads wird bei diesen Verfahren ein zeitlich vom neuen Rechenzyklus relativ weit ab liegender Geschwindigkeitswert für die Regelung herangezogen.

Es ist auch schon bekannt (DE-C2 2801520 Fig. 2), die aufeinanderfolgenden Halbwellen des Sensorsignals durch höherfrequente Impulse getrennt auszuzählen, jeweils den zuerst ermittelten Teilmeßwert abzuspeichern und nach Vorliegen des zweiten Teilmeßwerts durch Summenbildung die Periodendauer zu ermitteln, die zur Regelung ausgenutzt wird.

Der FR,A,2 566 132 ist zu entnehmen, die Geschwindigkeit eines Fahrzeugrades aus der Zeitdauer zwischen Nulldurchgängen eines Drehzahlsensors zu ermitteln.

### Vorteile der Erfindung

Die neue Lösung zur Gewinnung der Radgeschwindigkeit hat den Vorteil, daß tatsächlich der aktuellste Geschwindigkeitswert für die Regelung ausgenutzt wird. Die Geschwindigkeit wird quasi kontinuierlich aktualisiert. Dadurch wird der Fehler reduziert. Die Lösung setzt einen sehr schnellen Rechner voraus (z. B. INTEL 8 Ø C196 KR). Führt man bei ihm die geschwindigkeitsproportionale Frequenz den Event-Processor Eingängen zu, so führt jede Flanke des Rechtecksignals über die Peripheral-Transaction-Server-Einheit zur direkten Speicherung eines Zeitbasiswerts. Eine im Rechner vorhandene maximal drei Zeitbasiswerte fassende Speicherzellentrommel wird mit jedem neuen Zeitbasiswert aktualisiert, d. h. dieser wird neu eingespeichert und der älteste der gespeicherten Werte wird gelöscht.

### Figurenbeschreibung

Anhand der Zeichnung wird ein Ausführungsbeispiel der Erfindung erläutert. Es zeigen

Fig. 1    ein Blockschaltbild zur Erläuterung des Prinzips

Fig. 2    ein Diagramm zur Erläuterung des Ausführungsbeispiels.

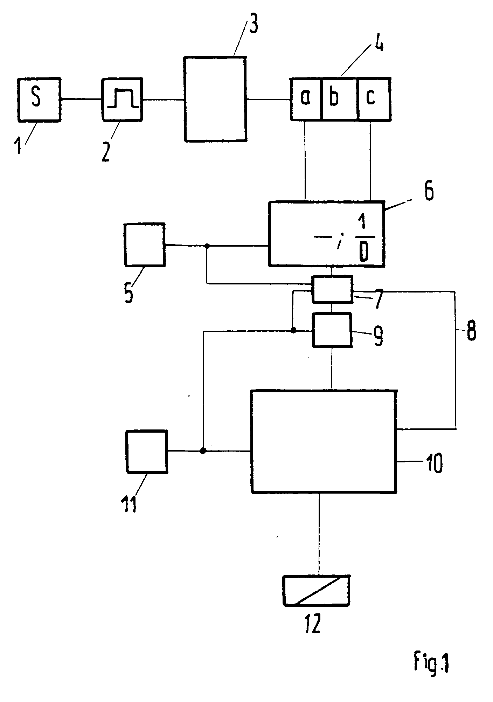

In Fig. 1 ist mit 1 ein Sensor zur Erfassung der Drehzahl eines Fahrzeugrads und mit 2 ein Glied, um aus dem Sinussignal des Sensors ein Rechtecksignal zu erzeugen, bezeichnet. Bei jedem Nulldurchgang des Rechtecksignals wird ein Block 3 zur Abgabe eines Zeitbasissignals (ein den Zeitpunkt kennzeichnendes Signal) veranlaßt. Dieses Signal wird einem mit einem Schieberegister vergleichbaren Speicher 4 zugeführt; dadurch wird der älteste Wert (in 4c) gelöscht, die in b und a gespeicherten Werte werden um eine Position nach rechts geschoben und der neue Wert wird in a gespeichert.

Zu Beginn des nächsten Unterzyklus gibt ein Taktgeber 5 ein Signal ab, wodurch die Recheneinheit 6 die Differenz D der in 4a und 4c gespeicherten Werte und gleichzeitig 1/D bildet. Das Ergebnis $V_R = 1/D$ wird in einen Begrenzer 7 auf eine vorgegebene maximale Änderungsgeschwindigkeit (z. B. 50 g) begrenzt. Man kann die maximale Änderungsgeschwindigkeit variabel machen, so z. B. bei Beginn eines Regelzyklus bei einem kleinen Wert z. B. 10 g beginnen und dann diesen Wert in den einzelnen Unterzyklen in Stufen erhöhen, bis die 50 g Obergrenze erreicht wird. Eine Leitung 8 soll diese Möglichkeit andeuten. Jeweils der zuletzt ermittelte Geschwindigkeitswert wird in einem Speicher 9 gespeichert. Der Rechentakt eines Rechners 10 wird von einem Taktgeber 11 bestimmt. Zu Beginn eines Rechentakts wird die zuletzt ermittelte und im Speicher 9 gespeicherte Radgeschwindigkeit an den Rechner 10 übergeben, der nach einem vorgegebenen Algorithmus daraus Bremsdrucksteuersignale erzeugt, mit denen z. B. ein 3/3-Magnetventil 12 angesteuert wird.

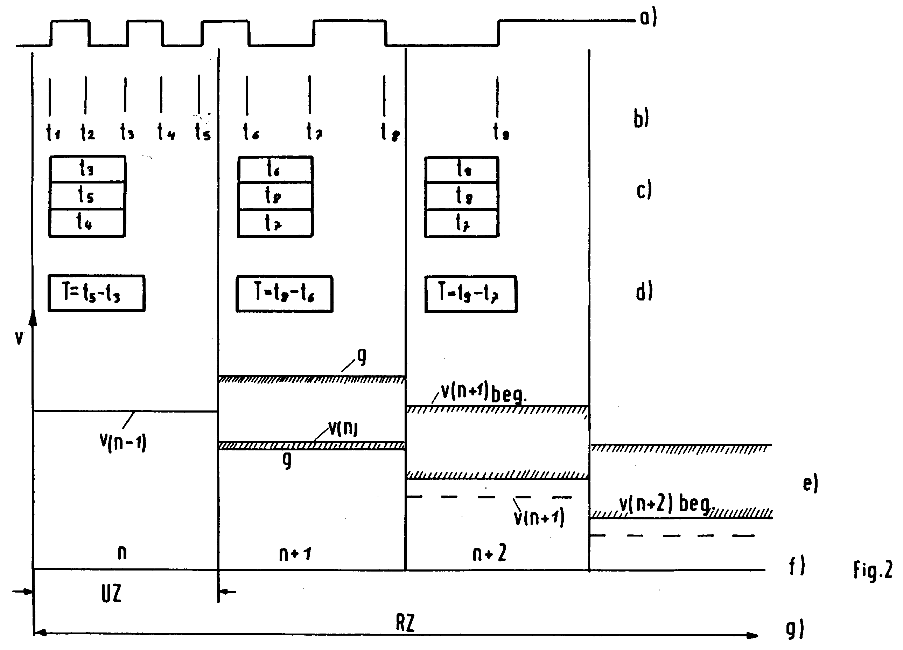

Fig. 2 zeigt in Zeile a) das aus dem Sensorsignal gewonnene Rechtecksignal. In Zeile b) sind die Zeitbasiswerte an den einzelnen Nulldurchgängen aufgeschrieben. Man erkennt aus den Zeilen f) und g), daß der Rechenzyklus RZ in mehreren Unterzyklen UZ unterteilt ist. Mit Beginn des Unterzyklus (n+1), wird in der Recheneinheit 6 die Differenz $T = t_5 - t_3$ (Zeile d)) gebildet. Im Speicher 4 sind zu diesem Zeitpunkt die Werte $t_3$ bis $t_5$ gespeichert. Dieser Differenz T entspricht die im Zyklus (n+1) in Zeile e) eingezeichnete Geschwindigkeit $V_{(n)}$, die nicht begrenzt werden mußte (Begrenzung g), weil die Änderung gegenüber $V_{(n-1)}$ nicht zu groß war. Entsprechend wird bei Beginn des Unterzyklus (n+2) die Differenz $T = (t_8 - t_6)$ gebildet. Die zugehörige Geschwindigkeit $V_{(n+1)}$ würde, wie gestrichelt eingezeichnet, liegen. Wegen der Begrenzung wird der Geschwindigkeitswert jedoch auf die

Begrenzung gelegt (V$_{(n+1)}$ beg). Bei Beginn eines neuen Rechenzyklus RZ wird dann jeweils der zuletzt gewonnene Geschwindigkeitswert als Radgeschwindigkeit ausgewertet.

## Patentansprüche

1. Verfahren zur Regelung des Schlupfes, bei dem in vorgegebenen Rechnerzyklen aus der Geschwindigkeit wenigstens eines Fahrzeugrads Bremsdrucksteuersignale ermittelt werden, die zur Ansteuerung von Bremsdrucksteueranordnungen verwendet werden, wobei

   - Radgeschwindigkeiten durch Ausmessen der Zeit zwischen Nulldurchgängen der Sensorsignale ermittelt werden,
   - die Rechnerzyklen in mehrere gleichgroße Unterzyklen aufgeteilt sind,
   - im Rechner jeweils die Zeitbasiswerte der letzten drei Nulldurchgänge gespeichert sind,
   - jeweils zu Beginn eines Unterzyklus aus dem gespeicherten drittletzten Zeitbasiswert und dem gespeicherten letzten Zeitbasiswert eine Radgeschwindigkeit ermittelt wird,
   - die Änderung des Geschwindigkeitswerts auf einen physikalisch möglichen maximalen Wert begrenzt wird,
   - die ermittelte Radgeschwindigkeit, gegebenenfalls nach der Begrenzung, gespeichert wird und
   - der bei Beginn eines neuen Rechnerzyklus gespeicherte, zuletzt errechnete Radgeschwindigkeitswert als Radgeschwindigkeitswert für den neuen Rechnerzyklus dient.

2. Verfahren nach Anspruch 1, dadurch gekennzeichnet, daß die Begrenzung zu Beginn eines Regelzyklus des Schlupfregelsystems bei einem kleinen Wert beginnend jeweils von Unterzyklus zu Unterzyklus bis zu dem maximalen Wert in Stufen erhöht wird.

## Claims

1. Method for controlling slip, in which method brake pressure control signals which are used for actuating brake pressure control arrangements are determined from the speed of at least one vehicle wheel at prescribed computer cycles,

   - wheel speeds being determined by measuring the time between zero crossings of the sensor signals,
   - the computer cycles being divided into a plurality of subcycles of equal magnitude,
   - in each case the time base values of the last three zero crossings being stored in the computer,

   - a wheel speed being determined in each case at the start of a subcycle from the stored third-last time base value and the stored last time base value,
   - the change in the speed value being limited to a physically possible maximum value,
   - the determined wheel speed being stored, if appropriate after limitation, and
   - the last wheel speed value to be calculated which is stored at the start of a new computer cycle serving as wheel speed value for the new computer cycle.

2. Method according to Claim 1, characterized in that the limitation at the start of a control cycle of the slip control system starts at a small value and is increased in increments in each case from subcycle to subcycle up to the maximum value.

## Revendications

1. Procédé de régulation du patinage selon lequel, dans des cycles de calcul prédéterminés et en partant de la vitesse d'au moins une roue du véhicule, on forme des signaux de commande de la pression de frein servant à commander les dispositifs de commande de pression de frein, de sorte que

   - les vitesses de roue sont obtenues en mesurant le temps compris entre les passages par zéro des signaux du capteur,
   - les cycles de calcul sont subdivisés en plusieurs sous-cycles de mêmes dimensions,
   - dans le calculateur on enregistre chaque fois la valeur de la base de temps des trois derniers passages par zéro,
   - chaque fois au début d'un sous-cycle, à partir de la troisième dernière valeur de la base de temps enregistrée et de la dernière base de temps enregistrée, on détermine une vitesse de roue,
   - on limite la variation de la valeur de la vitesse à une valeur maximale physiquement possible,
   - on met en mémoire la vitesse de roue obtenue, le cas échéant après l'avoir limitée, et
   - on utilise comme vitesse de roue pour le nouveau cycle de calcul, la valeur de la vitesse de roue calculée en dernier lieu et qui a été enregistrée au début d'un nouveau cycle de calcul.

2. Procédé selon la revendication 1, caractérisé en ce qu' on augmente la limitation au début d'un cycle de régulation du système de régulation de patinage pour une faible valeur en commençant chaque fois d'un sous-cycle à l'autre et en augmentant par échelon jusqu'à la valeur maximale.

Fig.1

Fig.2